# EUROPÄISCHE PATENTSCHRIFT

(11) **EP 0 438 405 B1**
(45) Veröffentlichungstag und Bekanntmachung des Hinweises auf die Patenterteilung: **09.02.1994**
(21) Anmeldenummer: 89904763.3
(22) Anmeldetag: 21.04.1989
(51) Int. Cl.: H01S 3/08

(54) **LASERRESONATOR**
LASER RESONATOR
RESONATEUR POUR LASERS

(30) Priorität: 22.04.1988 DE 3813567
(43) Veröffentlichungstag der Anmeldung: 31.07.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: DU, Keming, D-5100 Aachen (DE); LOOSEN, Peter, D-5100 Aachen (DE)
(74) Vertreter: Eichler, Peter, Dipl.-Ing.
(86) Internationale Anmeldenummer: DE8900249
(87) Internationale Veröffentlichungsnummer: WO8910640

(56) Entgegenhaltungen:
- EP-A- 0 100 089
- EP-A- 0 202 807
- DE-A- 2 029 742
- US-A- 3 681 709
- US-A- 4 050 036
- US-A- 4 096 447
- APPLIED OPTICS, Band 14, Nr. 10, Oktober 1975, (New York, US); C.H. Chan: "Mode discrimination with rimmed optical resonator", Seiten 2418-2425

## Beschreibung

Die Erfindung bezieht sich auf einen Laserresonator, insbesondere für Kohlendioxidlaser, mit zwei Resonator-Endspiegeln, die aktives Material zwischen zwei vollreflektierenden Endspiegelflächen aufweisen.

Die Auskopplung von Laserstrahlung und damit von Laserleistung aus dem optischen Resonator des Lasers erfolgt gewöhnlich dadurch, daß ein Resonatorspiegel entweder teiltransmittierend ausgebildet ist, oder daß er Laserstrahlung aus dem Resonatorbereich hinausstrahlt. Resonatoren mit teiltransmittierenden Spiegeln sind bevorzugt stabile Resonatoren, bei denen also der Laserstrahl aufgrund der fokussierenden Wirkung eines oder beider Spiegel in dem durch die Spiegel definierten Bereich um die Resonatorachse herum lokalisiert bleibt. Eine derartige Ausbildung stabiler Resonatoren mit Rotationssymmetrie um die Resonatorachse herum hat den Vorteil, daß die ausgekoppelte Laserstrahlung eine hohe Strahlqualität hat. Diese wird beispielsweise dadurch bestimmt, über welche Strecke der Laserstrahl sich näherungsweise parallel ausbreitet bzw. ist ein Maß dafür, wie klein der Brennfleck ist, auf den der Laserstrahl gebündelt werden kann bzw. wie groß die höchstens erreichbare Intensität ist. Die theoretisch höchste Qualität weist bekanntlich die Strahlverteilung nach dem Gaußschen Grundmode TEM 00 auf. Andere Strahlverteilungen, z.B. TEM 01 haben abnehmende Strahlqualität bei wachsendem Strahldurchmesser. Andererseits ist ein großer Strahldurchmesser erforderlich, um hohe Ausgangsleistungen zu erzielen, wenn man davon ausgeht, daß letztere große Volumina aktiven Materials erfordern und die Resonatorlänge aus begreiflichen Gründen begrenzt ist. Daraus ergibt sich, daß eine Steigerung der Ausgangsleistung durch Vergrößerung des Strahldurchmessers im Prinzip mit einer Verschlechterung der Strahlqualität einhergeht. Hinzu kommt, daß die transmittierenden Spiegel nicht beliebig hoch belastbar sind, also von der durch sie hindurchtretenden Laserstrahlung nicht übermäßig erwärmt werden dürfen, damit ihre optische Wirkung nicht beeinträchtigt wird und ihr Material nicht zerstört wird.

Es ist daher allgemein bekannt, die optischen Resonatoren mit voll reflektierenden Spiegeln auszurüsten, die derart ausgebildet und angeordnet sind, daß ein gewisser Anteil der Laserstrahlung den Resonatorbereich nach einer etlichen Anzahl von Umläufen verläßt. Die Auskopplung erfolgt üblicherweise mit einem Loch- oder sogenannten Scraper-Spiegel, wodurch der für instabile Resonatoren charakteristische Hohlstrahl erzeugt wird. Derartige instabile Resonatoren haben üblicherweise einen hohen Auskopplungsgrad und setzen deswegen aktives Material mit entsprechend hoher Verstärkung voraus. Die Strahlqualität ist in der Regel etwa um den Faktor 3 bis 4 geringer. Sie ist dann besonders gering, wenn der Auskopplungsgrad klein gehalten wird, z.B. durch entsprechende Bemessung der die Auskopplung bewirkenden Spiegelflächen. Hinzu kommt als grundsätzlicher Nachteil des instabilen Aufbaus eines Resonators noch die vergleichsweise hohe Justierempfindlichkeit seiner Spiegel sowie seine Empfindlichkeit gegenüber optischen Rückwirkungen, d.h. gegenüber Lichtreflexion aus der Bearbeitungsstelle in den Resonator.

Außer dem allgemein bekannten vorbeschriebenen instabilen Resonator ist aus der US-PS 3 681 709 ein Laserresonator bekannt, insbesondere für Kohlendioxidlaser, mit zwei Resonatorendspiegeln, die aktives Material zwischen zwei vollreflektierenden Endspiegelflächen aufweisen, welche einen Resonatorraum bilden, und mit mindestens einer dritten vollständig reflektierenden Spiegelfläche, mit der die Laserstrahlung aus dem Resonator ausgekoppelt wird. Die dritte Spiegelfläche, mit der die Laserstrahlung aus dem Resonator ausgekoppelt wird, ist als Endspiegelfläche eines der beiden Endspiegel ausgebildet. Der zwischen den beiden Endspiegelflächen gelegene Resonatorraum ist stabil und die dritte Spiegelfläche des einen Endspiegels dient ausschließlich zur Auskopplung von im Grundmode schwingendem Laserlicht aus dem stabilen Resonator. Ein instabiler Resonatorraum ist bei dem bekannten Resonator nicht vorhanden. Vielmehr erfolgt die Auskopplung der Laserstrahlung durch die dritte Spiegelfläche des einen Endspiegels direkt auf einen Fokussierspiegel eines Fokussiersystems.

Aus der US-A-40 96 447 ist ein instabiler Laserresonator für einen Kohlendioxidlaser bekannt, der zwei vollreflektierende Resonatorspiegel aufweist, von denen einer eine kreisförmige und senkrecht zur Resonatorachse gelegene Lichtdurchtrittsöffnung hat, die eine einen Vollstrahl bildende Auskopplungsöffnung ist. Der die Lichtdurchtrittsöffnung aufweisende Resonatorendspiegel ist konkav ausgebildet und hat einen auf den Außendurchmesser des aktiven Materials abgestimmten Außendurchmesser. Der andere Resonatorendspiegel ist konvex ausgebildet und hat einen vergleichsweise kleinen Aussendurchmesser, der in der Größenordnung des Durchmessers der Lichtdurchtrittsöffnung des ersten Resonatorendspiegels liegt. Beide Endspiegel ergeben konfokale Fokusringe. Es ist ein den konvexen Endspiegel umgebender dritter flacher Spiegel vorhanden. Dieser und der konkave, die Lichtdurchtrittsöffnung aufweisende Spiegel schließen das laseraktive Material zwischen sich ein.

Der Erfindung liegt die Aufgabe zugrunde, einen instabilen Resonator der eingangs genannten Art so zu verbessern, daß er mit einem verringerten Auskopplungsgrad auskommt und/oder eine verbesserte Strahlqualität aufweist.

Diese Aufgabe wird durch einen Laserresonator gelöst, insbesondere für Kohlendioxidlaser, mit zwei Resonator-Endspiegeln, die aktives Material zwischen zwei vollreflektierenden Endspiegelflächen aufweisen, welche einen instabilen Resonatorraum bilden, und mit mindestens einer dritten vollständig reflektierenden Spiegelfläche, mit der die Laserstrahlung vor ihrer durch eine Auskopplungsöffnung des Resonators erfolgenden Auskopplung reflektiert wird, wobei zwischen den beiden Endspiegeln zusätzlich zum instabilen Resonatorraum mindestens ein stabiler Resonatorraum vorhanden ist, und wobei der zum instabilen Resonatorraum zusätzliche stabile Resonatorraum in demselben aktiven Material von der dritten Spiegelfläche als Endspiegelfläche eines der beiden Endspiegel mit der Endspiegelfläche des anderen Endspiegels gebildet ist.

Für die Erfindung ist die Mischbauform aus stabilem und instabilem Resonator von Bedeutung. Mit dem stabilen Resonatorraum wird die mittlere Aufenthaltsdauer der Strahlung im Resonator verlängert, so daß die Strahlungsintensität im Resonator ansteigt. Infolgedessen wird das aktive Material stärker zur Sättigung hin betrieben und der Wirkungsgrad steigt an. Dementsprechend verringert sich der Auskopplungsgrad, also das Verhältnis von ausgekoppelter Leistung zur im Resonator erzeugten Leistung. Daher können mit stabilem Resonatorraum versehene instabile Resonatoren in Lasersystemen mit vergleichsweise kleiner Verstärkung eingesetzt werden, um dieselbe externe Laserstrahlleistung zu erzeugen. Außerdem wird durch den Einfluß des stabilen Resonatorraums auch die innere Struktur des ausgekoppelten Laserstrahls im Vergleich zu herkömmlichen Resonatoren so modifiziert, daß sich eine höhere Strahlqualität ergibt bzw. ein geringerer Fokusradius. Das wird anhand der Ausführungsbeispiele noch näher erläutert.

Vorteilhafterweise bildet die dritte Spiegelfläche als Endspiegelfläche eines der beiden Endspiegel mit letzterem eine Baueinheit bzw. ist Bestandteil dieses Endspiegels. Es ergibt sich eine feste räumliche Zuordnung zwischen den Endspiegelflächen, was die Justierempfindlichkeit des Resonators herabsetzt und damit im Sinne der Steigerung der Strahlqualität wirkt. Der die beiden Spiegelflächen aufweisende Endspiegel kann in der erforderlichen Form mittels Dreh- und Fräsmaschinen in entsprechend hoher Präzision hergestellt werden, beispielsweise rotationssymmetrisch. Dabei ist die erforderliche hohe Oberflächengüte und auch die Formtoleranz mit Lambda/10 bis Lambda/20 durch vertretbaren Aufwand erreichbar.

Zweckmäßigerweise ist die dritte Spiegelfläche senkrecht zur Resonatorachse angeordnet, was zum einen der symmetrischen Ausbildung des Laserstrahls zugute kommt und darüber hinaus auch vorteilhaft für die Herstellung der dritten Spiegelfläche ist bzw. für die Herstellung der anderen Spiegelflächen sein kann, beispielsweise wenn deren eine mit der dritten Spiegelfläche eine Baueinheit bildet. In diesem Sinne liegen rotationssymmetrische und damit vorteilhafte Spiegelflächen vor, wenn die dritte Spiegelfläche kreis- oder ringförmig ist.

Eine vom baulichen Aufwand her einfach zu gestaltende Resonatoranordnung ergibt sich, wenn die Laserstrahlung als Hohlstrahl durch eine Auskopplungsöffnung mit angepaßtem Querschnitt auskoppelbar und die dritte Spiegelfläche innerhalb des Hohlstrahls im Bereich der Auskopplungsöffnung angeordnet ist.

Eine Weiterbildung der Erfindung bezieht sich auch auf einen Laserresonator, insbesondere für Kohlendioxidlaser, mit einem von zwei vollreflektierenden Resonatorendspiegeln gebildeten Resonator, und mit einer kreisförmigen und senkrecht zur Resonatorachse gelegenen Lichtdurchtrittsöffnung in einem der Endspiegel, wobei die senkrecht zur Resonatorachse gelegene Lichtdurchtrittsöffnung eine einen Vollstrahl bildende Auskopplungsöffnung ist. Im Querschnitt dieses Vollstrahls ist die gesamte ausgekoppelte Laserleistung nahe der Resonatorachse bzw. nahe der Längsachse konzentriert, so daß sich eine entsprechende Verbesserung der Strahlqualität insbesondere bei Fernfeldbetrachtung der Intensitätsverteilung über den Strahlquerschnitt ergibt. Zugleich kann der Laserresonator einfacher aufgebaut werden, weil für seine grundsätzliche Ausbildung eine Umlenkung des Lichts im Resonator nicht erforderlich ist.

Eine vorteilhafte Ausgestaltung des Resonators ergibt sich dadurch, daß der die kreisförmige Öffnung aufweisende Endspiegel eine kreisringförmige, dem anderen Endspiegel zugewendete konvexe oder konkave Endspiegelfläche hat, und daß der andere Endspiegel eine kreisringförmige, mit gegen Null tendierendem Innendurchmesser versehene konkave oder konvexe Endspiegelfläche aufweist. Grundbedingung für die Formgebung der beiden Endspiegelflächen ist lediglich, daß diese zur Erzeugung des Vollstrahls keine von der Resonatorachse aus dem Reflektionsbereich radial nach außen hinauswandernde Reflektionsstrahlen erzeugen, damit die gesamte ausgekoppelte Laserstrahlung mit dem Vollstrahl zur Verfügung steht. Es ist allerdings möglich, mit dem durch die beiden Endspiegelflächen gebildeten Resonatorbereich zusammenwirkende und sich überlagernde stabile Resonatorräume zu bilden. Das wird dadurch erreicht, daß sich radial nach außen und/oder nach innen an die kreisringförmige Endspiegelfläche des die Öffnung aufweisenden Endspiegels eine mit der konkaven Endspiegelfläche des anderen Endspiegels einen stabilen äußeren und/oder inneren Resonatorraum bildende Endspiegelfläche anschließt. Bei derartigen Resonatoren wird also von den beiden vorbeschriebenen grundsätzlichen Lösungsgedanken gemeinsam im Sinne der Verringerung des Auskopplungsgrades und/oder der Verbesserung der Strahlqualität Gebrauch gemacht.

Bei Resonatoren mit Vollstrahlausblendung ist es wichtig, örtliche Fluktuationen der Laserstrahlungsintensität auszuschalten, die dadurch entstehen, daß der Strahl beim Durchlaufen des Resonators von außen zur Mittelachse des Resonators unmittelbar ausgeblendet wird. Derartigen Fluktuationen wird dadurch begegnet, daß mindestens ein erster Endspiegel eine Endspiegelfläche hat, mit der ein von dem zweiten Endspiegel reflektierter Strahlungsanteil über die Mittelachse des Resonators hinweg auf den zweiten Endspiegel reflektierbar ist. Die vorgenannten Merkmale führen zu einer Verkoppelung zwischen sich diagonal über die Mittelachse hinweg gegenüberliegenden Bereichen eines Endspiegels bzw. beider Endspiegel, wenn die Spiegelfläche entsprechend ausgebildet ist.

Eine einfache Ausgestaltung der Resonatoranordnung bezüglich der der Verkoppelung dienenden Endspiegelfläche liegt vor, wenn die Endspiegelfläche konkav ausgebildet und konzentrisch zum die Mittelachse heraum angeordnet ist und mit einer kreisringförmigen, unmittelbar um die Lichtdurchtrittsöffnung herum angeordneten Endspiegelfläche einen stabilen Resonatorraum bildet. Außer der Verringerung der aus dem instabilen Resonatorbereich herrührenden Fluktuationen der Laserintensität bei Vollstrahlauskopplung wird durch den stabilen Resonatorraum eine Verbesserung der Strahlqualität erreicht.

Eine baulich einfache Ausführungsform eines stabilen Resonators ergibt sich dadurch, daß der die kreisförmige Lichtdurchtrittsöffnung aufweisende zweite Endspiegel ein planer Lochspiegel und der andere Endspiegel eine kreisringförmige konkave Endspiegelfläche aufweist. Der plane Lochspiegel ist bei allen erforderlichen Abmessungen einfach herzustellen, was insbesondere von Vorteil ist, wenn er nach Herstellung des vergleichsweise komplizierten ersten Endspiegels auf diesen abgestimmt werden muß.

Um Qualitätsstörungen der Laserstrahlung durch im Bereich der Symmetrieachse gelegene Spitzen od.dgl. des ersten Endspiegels zu vermeiden, ist der erste Endspiegel der Lichtdurchtrittsöffnung des zweiten Endspiegels gegenüber mit einer Planfläche versehen, die tangential in die Krümmungsbereiche der konkaven Endspiegelflächen übergeht.

Bei der vorbeschriebenen Ausführungsform handelt es sich aufgrund des Zusammenwirkens eines Planspiegels und eines Konvexspiegels um einen stabilen Resonator.

Die Erfindung wird anhand von in der Zeichnung dargestellten Ausführungsbeispielen erläutert. Es zeigt:
- Fig.1: die Strahlführung innerhalb eines ersten Resonators gemäß der Erfindung,
- Fig.2a bis 2b: mögliche Varianten des Spiegels M2 der Fig.1,
- Fig.3a bis 3c: Darstellungen der Nahfeld-Intensitätsverteilungen I=f(r) und diesem jeweils zugeordnete Fernfeldintensitätsverteilungen in schaubildlicher Darstellung,
- Fig.4: eine radial integrierte Intensitätsverteilung I=f (Radius),
- Fig.5 bis 7: weitere Resonatoren,
- Fig.8: eine Fluktuation der Laserintensität vermeidende weitere Ausführungsform gemäß der Erfindung und
- Fig.9: einen Resonator mit einem planen Lochspiegel.

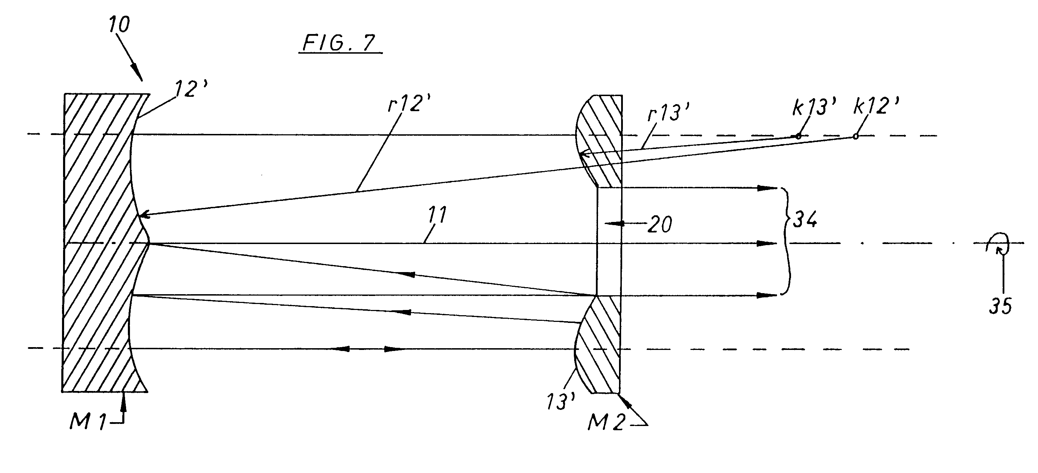

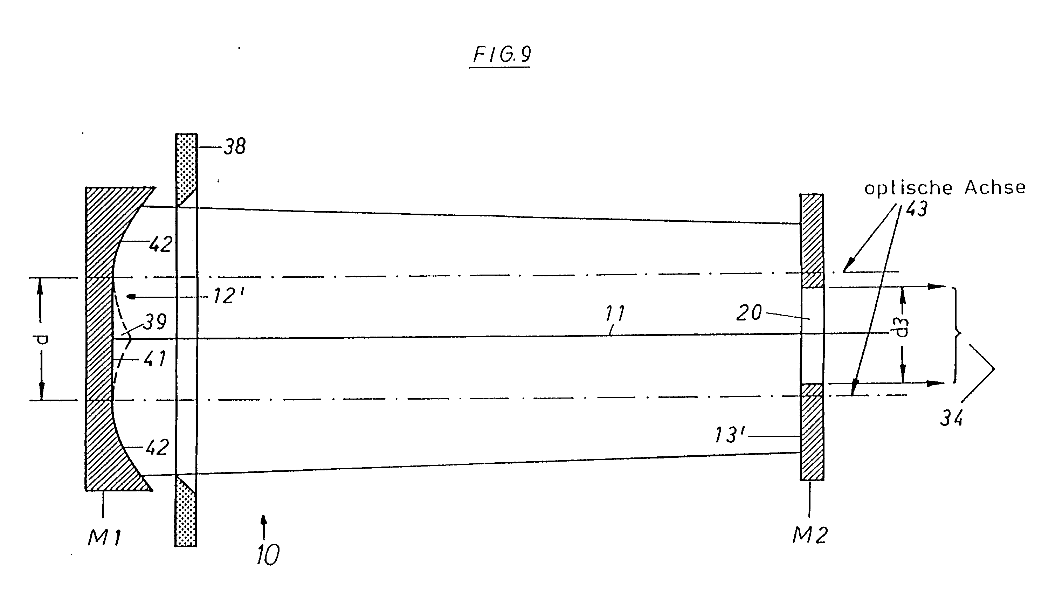

Die Fig.7 und 9 stellen Resonatoren dar, die nicht zugleich sowohl einen instabilen als auch einen stabilen Resonatorraum aufweisen. Sie sind keine Ausführungsformen der Erfindung, dienen jedoch der Erläuterung der Ausbildung eines instabilen Resonatorraums (Fig.7) bzw. eines stabilen Resonatorraums (Fig.9).

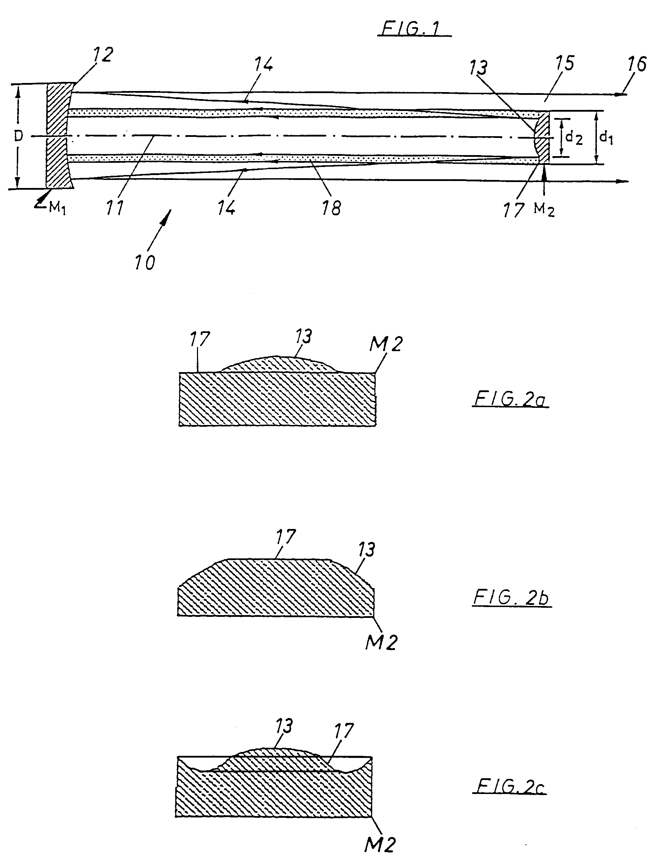

Der in Fig.1 dargestellte Resonator 10 besteht im wesentlichen aus den beiden Spiegeln M1 und M2, die beide rotationssymmetrisch ausgebildet sind. Sie sind infolgedessen bei entsprechend rotationssymmetrisch ausgestaltetem aktivem Material besonders vorteilhaft zu verwenden. Es ist jedoch auch möglich, die Spiegel M1,M2 anders zu gestalten, beispielsweise rechteckförmig, um damit aktives Material mit entsprechend rechteckigem Querschnitt optimal ausnutzen zu können.

Die Abmessungen der Spiegel M1,M2 sind mit D, d1 und d2 bezeichnet und geben Durchmesser für diese rotationssymmetrischen Spiegel an, die gemeinsam die Resonatorachse 11 bilden. Der Spiegel M1 ist ein Konkavspiegel mit entsprechend konkaver Spiegelfläche 12, die vollreflektierend ist, wobei der Spiegel beispielsweise metallisch ist. Der Spiegel M2 ist ebenfalls metallisch und damit vollreflektierend und hat eine Spiegelfläche 13, die konvex geformt ist. Die beiden vollreflektierenden Spiegelflächen 12,13 bilden einen instabilen Resonatorraum, d.h. die zwischen ihnen reflektierten Lichtstrahlen verbleiben nicht im Resonatorraum bzw. achsparallel, sondern wandern radial nach außen hin aus, was durch die Pfeile 14 angedeutet ist, so daß eine Auskopplung aus dem Resonator 10 durch eine im Fall der Fig.1 ringförmige Auskopplungsöffnung 15 erfolgt, wodurch der ausgekoppelte Laserstrahl 16 als Kohlstrahl bzw. mit sogenanntem Ringmode vorliegt. Der Laserstrahl 16 wird außerhalb des Resonators 10 optisch geformt, beispielsweise kollimiert und einer Anwendung zugeführt, beispielsweise wird der Laserstrahl 16 zum Schweißen eingesetzt.

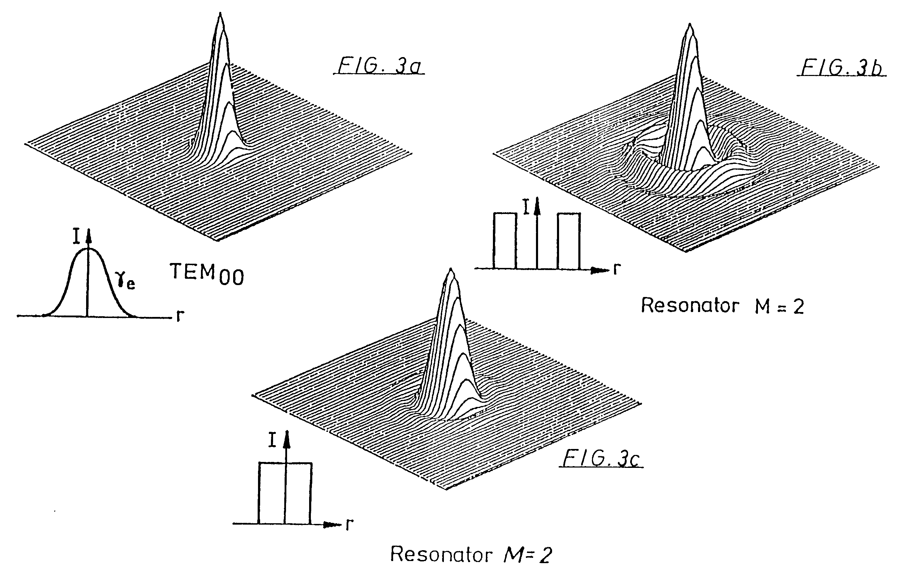

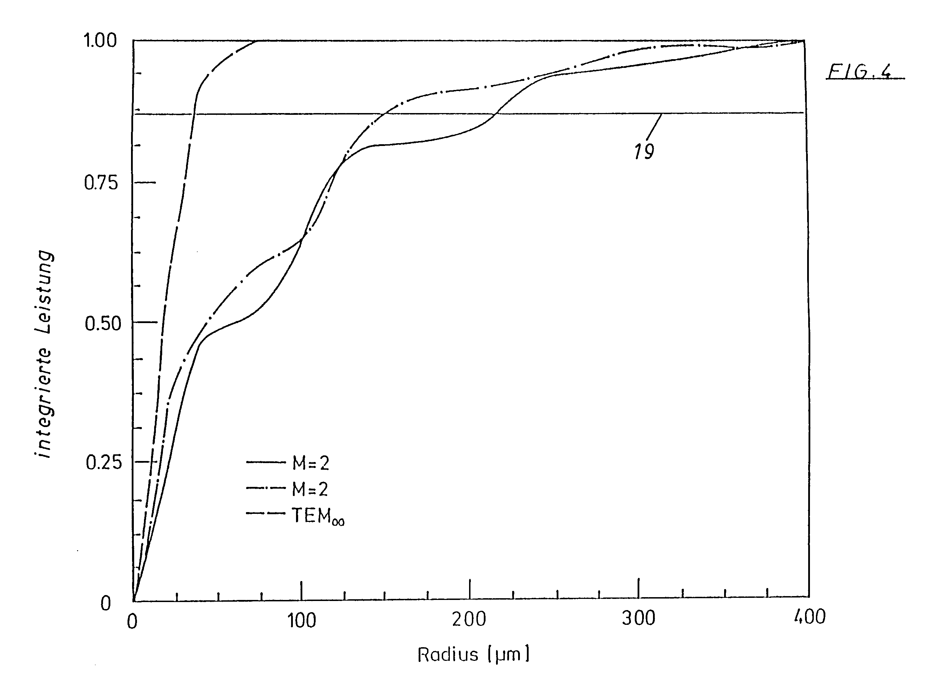

Der Spiegel M2 hat aber außer der Spiegelfläche 13, die den Durchmesser d2 hat, noch eine dritte Spiegelfläche 17 mit einem Außendurchmesser d1. Diese dritte Spiegelfläche 17 ist plan und quer zur Resonatorachse 11 angeordnet, so daß sie auf die Spiegelfläche 12 des Spiegels M1 gerichtet ist. Mit diesem bildet sie einen stabilen Resonatorraum 18, der hohlzylindergestaltig ist und in Fig.1 durch Punktung hervorgehoben wurde. In diesem stabilen Resonatorraum wird die Laserstrahlung mit einem Mode erzeugt, der eine vergleichsweise höhere Strahlqualität hat bzw. einen geringeren Fokusradius seiner Laserstrahlung ergibt, als sie bei der Laserstrahlung zwischen den Spiegelflächen 12,13 vorliegt. Das wird anhand der Fig.3a bis 3c und Fig.4 erläutert.

In Fig.3a zeigt I=f(r) den sogenannten Gaußschen Grundmode TEM 00, also die Verteilung der Intensität entsprechend der Gaußschen Glockenkurve. Diese Darstellung gilt für die Verteilung der Intensität im Nahfeld des Lasers bzw. des Resonators. Auch im Fernfeld konzentriert sich die Laserintensität gemäß der schaubildlichen Darstellung der Fig.3a auf die achsnahen Radiusbereiche. Dabei bezieht sich die Darstellung auf die Intensitätsverteilung im Brennpunkt einer 20cm-Linse. Fig.3b zeigt vergleichbare Darstellungen für einen Hohlstrahl I=f(r) im Nahfeld und schaubildlich im Fernfeld. Es ist erkennbar, daß im Fernfeld, welches für die Verhältnisse des Laserstrahls an der Anwendungsstelle maßgeblich ist, zwar ebenfalls eine Konzentration der Intensität in der Nähe der Strahlachse vorhanden ist, jedoch ist auch zu erkennen, daß die Intensität in größeren Abständen noch erheblich ist. Die erfindungsgemäße Ausgestaltung des Resonators führt hier zu einem verbesserten Ergebnis mit verringerten Intensitäten außerhalb des zentralen Intensitätskegels. Das ergibt sich aus Fig.3c und auch aus Fig.4, in der die wertfrei bezogene integrierte Leistung in Abhängigkeit vom Radius des Laserstrahls im Fokus einer Linse (Fokuslänge 20cm) dargestellt ist. Dabei wird der Strahlradius in herkömmlicher Weise festgelegt, wobei definiert wird, daß 86% der Laserleistung innerhalb eines Kreises mit diesem Radius liegen sollen. Es ergeben sich die ersichtlichen Verläufe für den Idealfall des TEM 00 in gestrichelter Darstellung, für den herkömmlichen instabilen Resonator mit M=2 entsprechend der mit einem ausgezogenen Strich dargestellten Kurve und für einen erfindungsgemäßen Resonator mit stabilem Resonatorraum entsprechend der strichpunktierten Kurve. Aus der Darstellung ist durch die Gerade 19 ersichtlich, daß der Radius bei der Intensitätsverteilung durch den erfindungsgemäßen Resonator in der Größenordnung von bis zu 40% verringert ist.

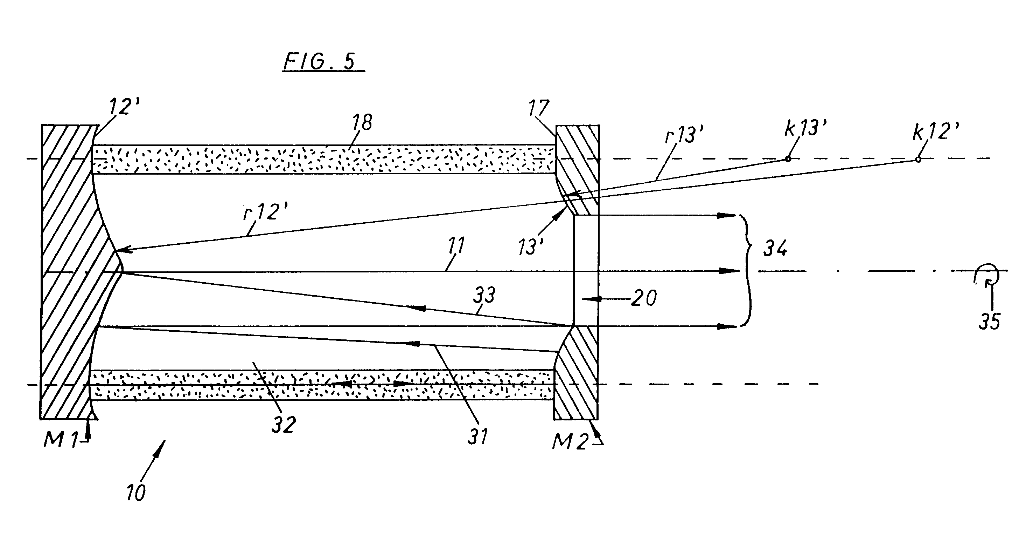

Die den Fig.5 bis 7 dargestellten Resonatoren 10 bestehen jeweils aus den beiden vollreflektierenden Spiegeln M1 und M2, die einander gegenüberliegend angeordnet sind und die Resonatorachse 11 bilden. Der Spiegel M1 hat eine kreisringförmige konkave Spiegelfläche 12' mit dem zugehörigen Radius r12' und einem zugehörigen Krümmungsmittelpunkt k12'. In der Nähe der Resonatorachse 11 ist die Spiegelfläche 12' abgerundet, um eine Spitze und damit eine Inhomogenitätsstelle für die Reflexion von Licht zu vermeiden.

Der andere Spiegel M2 ist kreisringförmig und hat eine Lichtdurchtrittsöffnung 20, die senkrecht zur Resonatorachse 11 angeordnet ist. Die dem Spiegel M1 zugewendete Fläche besteht aus einer konvexen Spiegelfläche 13' und einer dritten Spiegelfläche 17, die plan ausgebildet ist. Letztere bildet infolgedessen mit der Spiegelfläche 12' einen stabilen Resonatorraum 18, der hohlzylindrisch ist. In dem Inneren des hohlzylindrischen stabilen Resonatorraums 18 wird der Strahlungsverlauf im wesentlichen durch die konvexe Spiegelfläche 13' bestimmt, deren Radius r13' vom zugehörigen Krümmungsmittelpunkt k13' zu rechnen ist. Aus dem Vergleich der Lage der Krümmungsmittelpunkte k12',k13' ist ersichtlich, daß der Resonator bezüglich der dazwischen reflektierten Strahlung instabil ist. Infolgedessen ergibt sich bezüglich des aus der unteren Hälfte von Fig.5 ersichtlichen Strahlengangs, daß innerhalb des zwischen dem stabilen Resonatorraum 18 und dem Strahlengangstrahl 31 gelegenen instabilen Resonatorraum 32 Reflexionen zwischen den Spiegelflächen 12',13' stattfinden, während der durch die Strahlengangsstrahlen 31,33 gekennzeichnete Strahlungsanteil zur Bildung des Vollstrahls 34 herangezogen wird, der also durch die als Auskopplungsöffnung wirkende Lichtdurchtrittsöffnung 20 ausgekoppelt wird. Infolge der rotationssymmetrischen Ausgestaltung der Spiegel M1,M2, was durch den Pfeil 35 angedeutet wird, ist die Intensitätsverteilung im Vollstrahl 34 ebenfalls rotationssymmetrisch.

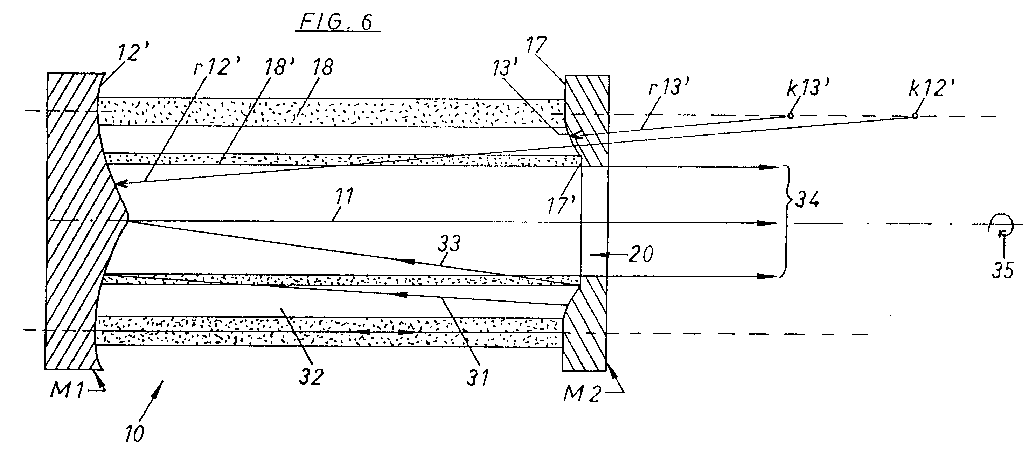

Der Resonator 10 der Fig.6 unterscheidet sich von dem der Fig.5 dadurch, daß zwischen der Spiegelfläche 13' und der Öffnung 20 eine weitere, mit der dritten Spiegelfläche 17 gleichwirkende Spiegelfläche 17' angeordnet ist. Es entsteht dadurch ein weiterer stabiler Resonatorraum 18', der der Steigerung der Strahlqualität und der Verringerung des Auskopplungsgrads bezüglich des Vollstrahls 34 dient.

Im Resonator 10 der Fig.7 sind zwei Spiegel M1,M2 dargestellt, die keinerlei Spiegelflächen zur Bildung eines stabilen Resonatorraums aufweisen. Trotzdem erfolgt eine Verbesserung der Strahlqualität und eine Verringerung des Auskopplungsgrads dadurch, daß die Laserstrahlung als Vollstrahl 34 ausgekoppelt wird. Es sind also lediglich Spiegelflächen 12',13' vorhanden, welche den Bedingungen für einen instabilen Resonator genügen. Im übrigen sind die Spiegelflächen 12',13' bzw. die Spiegel M1,M2 ausgebildet, wie es zu den Fig.5,6 beschrieben wurde. Ein mit dem Resonator gemäß Fig.7 erzeugter Vollstrahl 34 wird nicht die Qualität der Vollstrahlen 34 der Resonatoren der Fig.5,6 haben, jedoch zeigt er eine deutliche Verbesserung gegenüber den herkömmlichen Hohlstrahlen.

In allen Fällen der Fig.1,5,6 ist es möglich, die den stabilen Resonatorraum 18,18' im wesentlichen bestimmenden Spiegelflächen 17,17' abweichend vom dargestellten auszubilden, sofern nur die Bedingungen für einen stabilen Resonatorraum erfüllt sind. Beispiele hierzu sind aus Fig.2a bis 2c ersichtlich. Während die Fig.2a eine Seitenansicht des Spiegels M2 der Fig.1 zeigt, also mit mittig angeordneter konvexer Spiegelfläche 13 und ringförmig darum herum angeordneter dritter Spiegelfläche 17, die eine Planfläche ist, wurde die dritte Spiegelfläche 17 gemäß Fig.2b in der Mitte des Spiegels M2 angeordnet. Die Spiegelfläche 13 ist als konkaver Ring ausgebildet, der sich radial nach außen an die Spiegelfläche 17 anschließt und außer der Bildung eines instabilen Resonatorrraums 10' der Auskopplung von Laserstrahlung dient. Dadurch wird eine Überlagerung von Strahlengängen und eine damit verbundene Verschlechterung der Strahlqualität vermieden. Gemäß Fig.2c ist die die Instabilität des Resonators 10 bedingende Spiegelfläche 13 zentrich angeordnet, ebenso wie in den Fig.1,2a. Daran anschließend ist jedoch eine konkave dritte Spiegelfläche 17 vorgesehen, die das Licht bündelt, so daß darauf bezugnehmende Abänderungen der Spiegelfläche 12 vorgenommen werden können. Derartige Spiegelflächen bzw. Spiegel M2 können in den unterschiedlichsten Zusammenstellungen mit anderen Spiegeln M1 angewendet werden, sofern nur gewährleistet ist, daß die Strahlqualität verbessert und/oder der Auskopplungsgrad inbesondere durch entsprechend stabile Resonatorräume verringert wird.

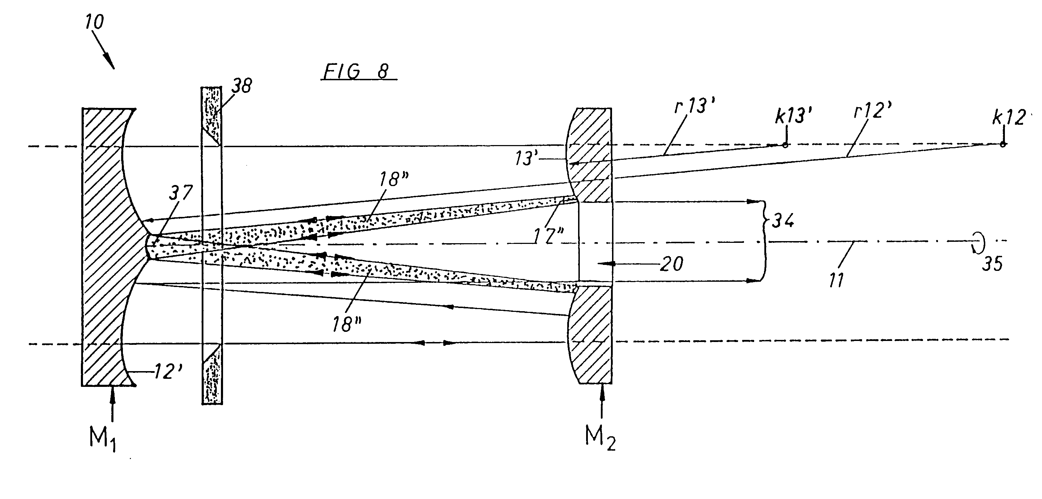

Der in Fig.8 dargestellte Resonator 10 entspricht in seinem grundsätzlichen Aufbau demjenigen der Fig.7. Auf die diesbezügliche Beschreibung zur Ausbildung der Spiegel M1,M2 und deren Spiegelflächen 12',13' wird hiermit für Fig.8 Bezug genommen. Zusätzlich ist eine den Resonatorraum außen begrenzende Blende 38 eingezeichnet. Die Besonderheit des Resonators 10 der Fig.8 besteht darin, daß der Spiegel M1 eine konkave Spiegelfläche 37 hat, die im Bereich der mittigen Spitze des Spiegels M1 der Fig.7 angeordnet ist und mit einer Spiegelfläche 17'' des zweiten Spiegels M2 zusammenwirkt. Diese Spiegelfläche 17'' schließt sich unmittelbar an die Lichtdurchtrittsöffnung 20 für den ausgekoppelten Vollstrahl 34 an und ist kreisringförmig. Sie bildet mit der Spiegelfläche 37 einen stabilen Resonatorraum 18''. Mit Hilfe des Resonatorraums 18''wird ein von dem zweiten Spiegel M2 reflektierter Strahlungsanteil über die Mittelachse 11 des Resonators 10 hinweg und mit Hilfe der Spiegelfläche 37 auf den zweiten Spiegel M2 reflektiert.

Fig.9 zeigt in schematischer Darstellung die wesentlichen Bauteile eines stabilen Resonators 10, nämlich die beiden Endspiegel M1,M2. Der Spiegel M2 ist ein planer Lochspiegel, dessen Loch eine Lichtdurchtrittsöffnung 20 für den Vollstrahl 34 bildet. Der ihm bezüglich der Resonator- oder Symmetrieachse 11 symmetrisch gegenüberliegende Endspiegel M2 ist mit einer kreisringförmigen konkaven Endspiegelfläche 12' versehen. Zwischen dieser und der Endspiegelfläche 13' findet der in dem nicht dargestellten aktiven Material stattfindende Laserprozeß statt, wobei die Blende 38 eine äußere radiale Begrenzung bildet. Die optische Achse 43 des Spiegelsystems ist ringförmig mit einem Durchmesser d. Diesem angepaßt, nämlich etwas kleiner, ist der Durchmesser d3 für die Öffnung 20 zum Auskoppeln eines Strahlungsanteils.

Der Resonator der Fig.9 ist ein stabiler Resonator, was sich daraus ergibt, daß der Spiegel M2 einen unendlich großen Krümmungsradius hat, so daß der Krümmungsmittelpunkt der Spiegelfläche 12' auf jeden Fall zwischen dem unendlichen fernen Krümmungsmittelpunkt des Spiegels M2 und diesem selbst liegt und damit die Bedingung für stabilere Resonanz erfüllt.

Die aus Fig.9 ersichtliche mittige Spiegelspitze 39 kann zu Störungen des Schwingungsvorgangs und damit zu Beeinträchtigungen der Strahlqualität führen. Infolgedessen ist der Endspiegel M1 mit einer Planfläche 41 versehen, durch die derartige Störungen vermieden werden. Die Planfläche 41 mündet tangential in die Krümmungsbereiche 42 des Spiegels M1, so daß auch hier keine störenden Inhomogenitäten der Spiegelfläche 12 vorhanden sind.

Der erfindungsgemäße Laserresonator dient dazu, einen instabilen Resonator so zu verbessern, daß er mit einem verringerten Auskopplungsgrad auskommt und/oder eine verbesserte Strahlqualität aufweist.

## Patentansprüche

1. Laserresonator, insbesondere für Kohlendioxidlaser, mit zwei Resonator-Endspiegeln (M1, M2), die aktives Material zwischen zwei vollreflektierenden Endspiegelflächen (12,12';13,13',37) aufweisen, welche einen instabilen Resonatorraum (32) bilden, und mit mindestens einer dritten vollständig reflektierenden Spiegelfläche (17,17',17''), mit der die Laserstrahlung vor ihrer durch eine Auskopplungsöffnung (15,20) des Resonators erfolgenden Auskopplung reflektiert wird, wobei zwischen den beiden Endspiegeln (M1,M2) zusätzlich zum instabilen Resonatorraum (32) mindestens ein stabiler Resonatorraum (18,18', 18'') vorhanden ist, und wobei der zum instabilen Resonatorraum (32) zusätzliche stabile Resonatorraum (18, 18',18'') in demselben aktiven Material von der dritten Spiegelfläche (17,17',17'') als Endspiegelfläche eines (M2) der beiden Endspiegel (M1,M2) mit der Endspiegelfläche (12,12',37) des anderen Endspiegels (M1) gebildet ist.

2. Resonator nach Anspruch 1, **dadurch gekennzeichnet**, daß die dritte Spiegelfläche (17,17') senkrecht zur Resonatorachse (11) angeordnet ist.

3. Resonator nach Anspruch 2, **dadurch gekennzeichnet**, daß die dritte Spiegelfläche (17,17',17'') kreis- oder ringförmig ist.

4. Resonator nach einem oder mehreren der Ansprüche 1 bis 3, **dadurch gekennzeichnet**, daß die Laserstrahlung (16) als Hohlstrahl durch eine Auskopplungsöffnung (15) mit angepaßtem Querschnitt auskoppelbar ist, und daß die dritte Spiegelfläche (17) innerhalb des Hohlstrahls im Bereich der Auskopplungsöffnung (15) angeordnet ist.

5. Laserresonator, insbesondere für Kohlendioxidlaser, mit einem von zwei vollreflektierenden Resonatorendspiegeln gebildeten Resonator, mit einer kreisförmigen und senkrecht zur Resonatorachse gelegenen Lichtdurchtrittsöffnung in einem der Endspiegel, nach einem oder mehreren der Ansprüche 1 bis 3, **dadurch gekennzeichnet**, daß die senkrecht zur Resonatorachse (11) gelegene Lichtdurchtrittsöffnung (20) eine einen Vollstrahl (34) bildende Auskopplungsöffnung ist.

6. Laserresonator nach Anspruch 5, **dadurch gekennzeichnet**, daß der die kreisförmige Öffnung (20) aufweisende Endspiegel (M2) eine kreisringförmige, dem anderen Endspiegel (M1) zugewendete konvexe oder konkave Endspiegelfläche (13') hat, und daß der andere Endspiegel (M1) eine kreisringförmige, mit gegen Null tendierendem Innendurchmesser versehene konkave oder konvexe Endspiegelfläche (12') aufweist.

7. Laserresonator nach Anspruch 5 oder 6, **dadurch gekennzeichnet**, daß sich radial nach außen und/oder nach innen an die kreisringförmige Endspiegelfläche (13') des die Öffnung (20) aufweisenden Endspiegels (M2) eine mit der konkaven Endspiegelfläche (12') des anderen Endspiegels (M1) einen stabilen äußeren und/oder inneren Resonatorraum (18 bzw. 18' bzw. 18'') bildende Spiegelfläche (17 bzw. 17' bzw. 17'') anschließt.

8. Laserresonator nach einem oder mehreren der Ansprüche 5 bis 7, **dadurch gekennzeichnet**, daß mindestens ein erster Endspiegel (M1) eine Endspiegelfläche (37) hat, mit der ein von dem zweiten Endspiegel (M2) reflektierter Strahlungsanteil über die Mittelachse (11) des Resonators (10) hinweg auf den zweiten Endspiegel (M2) reflektierbar ist.

9. Laserresonator nach Anspruch 8, **dadurch gekennzeichnet**, daß die Endspiegelfläche (37) konkav ausgebildet und konzentrisch um die Mittelachse (11) herum angeordnet ist und mit einer kreisringförmigen, unmittelbar um die Lichtdurchtrittsöffnung (20) herum angeordneten Spiegelfläche (17'') einen stabilen Resonatorraum (18'') bildet.

10. Laserresonator nach einem oder mehreren der Ansprüche 5 bis 9, **dadurch gekennzeichnet**, daß der die kreisförmige Lichtdurchtrittsöffnung (20) aufweisende zweite Endspiegel (M2) ein planer Lochspiegel ist und der andere Endspiegel (M1) eine kreisringförmige konkave Endspiegelfläche (12') aufweist.

11. Laserresonator nach Anspruch 5 oder 10, **dadurch gekennzeichnet**, daß der erste Endspiegel (M1) der Lichtdurchtrittsöffnung (20) des zweiten Endspiegels (M2) gegenüber mit einer Planfläche (41) versehen ist, die tangential in die Krümmungsbereiche (42) der konkaven Endspiegelfläche (12') übergeht.

## Claims

1. Laser resonator, in particular for carbon dioxide lasers, with two end mirrors (M1, M2) which have active material between two fully-reflecting end mirror surfaces (12, 12'; 13, 13', 37) which form an unstable resonator cavity (32), and with at least a third fully reflecting mirror surface (17, 17', 17'') with which the laser radiation is reflected before it is output through an output aperture (15, 20) of the resonator, wherein between the two end mirrors (M1, M2) in addition to the unstable resonator cavity (32) at least one stable resonator cavity (18, 18', 18'') is provided, and wherein the stable resonator cavity (18, 18', 18'') which is additional to the unstable resonator cavity (32) is formed in the same active material of the third mirror surface (17, 17', 17'') as an end mirror surface of one (M2) of the two end mirrors (M1, M2) with the end mirror surface (12, 12', 37) of the other end mirror (M1).

2. Resonator according to Claim 1, characterised in that the third mirror surface (17, 17') is advantageously arranged perpendicular to the resonator axis (11).

3. Resonator according to Claim 2, characterised in that the third mirror surface (17, 17', 17'') is circular or annular.

4. Resonator according to one or several of Claims 1 to 3, characterised in that the laser radiation (16) can be output as a hollow beam through an output aperture (15) with an adapted cross-section and the third mirror surface (17) is arranged within the hollow beam in the region of the output aperture (15).

5. Laser resonator, particularly for carbon dioxide lasers, with a resonator formed by two fully reflecting end mirrors and with a circular aperture for light to pass through which is positioned perpendicular to the resonator axis in one of the end mirrors, according to one or several of Claims 1 to 3, characterised in that the light aperture (20) positioned perpendicular to the resonator axis (11) is an output aperture which forms a full beam (34).

6. Laser resonator according to Claim 5, characterised in that the end mirror (M2) having the circular aperture (20) has a convex or concave end mirror surface (13') facing the other end mirror (M1), and that the other end mirror (M1) has a circular ring-shaped concave or convex end mirror surface (12') with an internal diameter tending towards zero.

7. Laser resonator according to Claim 5 or 6, characterised in that a mirror surface (17 or 17' or 17'') which forms a stable outer and/or inner resonator cavity (18 or 18' or 18'') with the concave end mirror surface (12') of the other end mirror (M1) is joined radially outwards and/or inwards onto the circular ring-shaped end mirror surface (13') of the end mirror (M2) having the aperture (20).

8. Laser resonator according to one or several of Claims 5 to 7, characterised in that at least a first end mirror (M1) has an end mirror surface (37) with which a proportion of the radiation reflected from the second end mirror (M2) can be reflected over the central axis (11) of the resonator (10) onto the second end mirror (M2).

9. Laser resonator according to Claim 8, characterised in that the end mirror surface (37) is of concave construction and is arranged concentrically around the central axis (11) and forms a stable resonator cavity (18'') with a circular ring-shaped mirror surface (17'') arranged directly around the light aperture (20).

10. Laser resonator according to one or several of Claims 5 to 9, characterised in that the second end mirror (M2) which has the circular light aperture (20) is a plane perforated mirror and the other end mirror (M1) has a circular ring-shaped concave end mirror surface (12').

11. Laser resonator according to Claim 5 or 10, characterised in that the first end mirror (M1) is provided opposite the light aperture (20) of the second end mirror (M2) with a plane surface (41) which merges tangentially into the curved regions (42) of the concave end mirror surface (12').

## Revendications

1. Résonateur à laser, en particulier pour laser à dioxyde de carbone, avec deux miroirs d'extrémité de résonateur (M1, M2), présentant le matériau actif entre deux faces de miroir d'extrémité (12, 12'; 13, 13', 37) à réflexion totale, formant un espace résonateur (32) instable et avec au moins une troisième face de miroir (17, 17', 17'') à réflexion totale, à l'aide de laquelle le rayonnement laser est réfléchi avant son désaccouplement s'effectuant à travers une ouverture de découplage (15, 20) du résonateur, au moins un espace résonateur (18, 18', 18'') stable, existant en plus de l'espace résonateur (32) instable, entre les deux miroirs d'extrémité (M1, M2) , et l'espace résonateur stable (18, 18', 18'') supplémentaire par rapport à l'espace résonateur (32) instable étant formé dans le même matériau actif par la troisième surface de miroir (17, 17', 17'') à titre de surface de miroir d'extrémité de l'un (M2) des deux miroirs d'extrémité (M1, M2), avec la surface d'extrémité (12, 12', 37) de l'autre miroir d'extrémité (M1).

2. Résonateur selon la revendication 1, caractérisé en ce que la troisième surface de miroir (17, 17') est disposée perpendiculairement par rapport à l'axe de résonateur (11).

3. Résonateur selon la revendication 2, caractérisé en ce que la troisième surface de miroir (17, 17', 17'') est discoïde ou annulaire.

4. Résonateur selon l'une ou plusieurs des revendications 1 à 3, caractérisé en ce que le rayonnement laser (16) peut être découplé sous forme de rayon creux, au moyen d'une ouverture de découplage (15) à section transversale adaptée et en ce que la troisième surface de miroir (17) est disposée à l'intérieur du rayon creux, dans la zone de l'ouverture de découplage (15).

5. Résonateur à laser, en particulier pour laser à dioxyde de carbone, avec un résonateur formé de deux miroirs d'extrémité de résonateur à réflexion totale, avec une ouverture de passage de lumière discoïde et placée perpendiculairement par rapport à l'axe du résonateur, dans l'un des miroirs d'extrémité, selon l'une ou plusieurs des revendications 1 à 3, caractérisé en ce que l'ouverture de passage de lumière (20) placée perpendiculairement par rapport à l'axe de résonateur (11) est une ouverture de découplage formant un rayon plein (34).

6. Résonateur à laser selon la revendication 5, caractérisé en ce que le miroir d'extrémité (M2) présentant l'ouverture discoïde (20) a une surface de miroir d'extrémité (13') convexe ou concave tournée vers l'autre miroir d'extrémité (M1), et en ce que l'autre miroir d'extrémité (M1) présente une surface de miroir d'extrémité concave ou convexe en forme d'anneau de cercle, pourvue d'un diamètre intérieur tendant vers zéro.

7. Résonateur à laser selon la revendication 5 ou 6, caractérisé en ce qu'une face de miroir (17, respectivement 17', respectivement 17''), formant un espace de résonateur extérieur et/ou intérieur (18, respectivement 18', respectivement 18'') stable avec l'autre face de miroir d'extrémité (12') concave de l'autre miroir d'extrémité (M1), se raccorde radialement vers l'extérieur et/ou vers l'intérieur à la face de miroir d'extrémité (13') en forme d'anneau de cercle du miroir d'extrémité (M2) présentant l'ouverture (20).

8. Résonateur à laser selon l'une ou plusieurs des revendications 5 à 7, caractérisé en ce qu'au moins un premier miroir d'extrémité (M1) comporte une face de miroir d'extrémité (37), à l'aide de laquelle une partie de rayonnement réfléchie par le deuxième miroir d'extrémité (M2) peut être réfléchie sur le deuxième miroir d'extrémité (M2), en passant par l'axe (11) du résonateur (10).

9. Résonateur à laser selon la revendication 8, caractérisé en ce que la face de miroir d'extrémité (37) est concave et disposée concentriquement autour de l'axe médian (11) et forme avec une face de miroir (17'') en forme d'anneau de cercle, disposée directement autour de l'ouverture de passage de lumière (20), un espace de résonateur (18'') stable.

10. Résonateur à laser selon l'une ou plusieurs des revendications 5 à 9, caractérisé en ce que le deuxième miroir d'extrémité (M2) présentant l'ouverture de passage de lumière (20) circulaire est un miroir à trou, plan, et l'autre miroir d'extrémité (M1) présente une face de miroir d'extrémité (12') concave en forme d'anneau de cercle.

11. Résonateur à laser selon la revendication 5 ou 10, caractérisé en ce que le premier miroir d'extrémité (M1) est pourvu, en face de l'ouverture de passage de lumière (20) du deuxième miroir d'extrémité (M2), d'une face plane (41) se transformant tangentiellement en les zones incurvées (42) de la face de miroir d'extrémité concave (12').
